# EUROPÄISCHE PATENTANMELDUNG

(11) **EP 4 410 088 A1**
(43) Veröffentlichungstag der Anmeldung: **07.08.2024**
(21) Anmeldenummer: 23212723.3
(22) Anmeldetag: 28.11.2023
(51) Int. Cl.: A01D 43/073, A01D 43/08

(54) **SELBSTFAHRENDE LANDWIRTSCHAFTLICHE ERNTEMASCHINE**

(30) Priorität: 31.01.2023 DE 102023102283; 31.01.2023 DE 102023000284; 31.01.2023 DE 102023102282; 31.01.2023 DE 102023102284
(71) Anmelder: CLAAS Selbstfahrende Erntemaschinen GmbH, 33428 Harsewinkel (DE)
(72) Erfinder: Deufel, Tobias, 88605 Meßkirch-Menningen (DE); Löffler, Niklas, 88367 Hohentengen (DE)
(74) Vertreter: CLAAS Gruppe

(57) **Zusammenfassung**

Die vorliegende Erfindung betrifft eine landwirtschaftliche Erntemaschine (1), insbesondere Feldhäcksler, mit zumindest einem Nachbeschleunigungsorgan (12) zur veränderlichen Beschleunigung von Erntegut (EG) und mit einer dem Nachbeschleunigungsorgan (12) nachgeordneten Überladeeinrichtung (13) zum Auswerfen des Ernteguts (EG) in einen Ladebehälter (47), welche am auswurfseitigen Ende eine Auswurfklappe (26) umfasst, wobei die Überladeeinrichtung (13) um eine vertikale Achse (20) und eine horizontale Achse (21) schwenkbar ist, wobei zur veränderlichen Beschleunigung des Erntegutes (EG) die Weite eines Erntegutdurchgangsspaltes (31) des Nachbeschleunigungsorgans (12) mittels einer Spaltänderungsvorrichtung (37) anpassbar ist, wobei der Spaltänderungsvorrichtung (37) eine Steuerungsvorrichtung (14) zugeordnet ist, die zur Ansteuerung der Spaltänderungsvorrichtung (37) durch von der Steuerungsvorrichtung (14) generierte Steuersignale eingerichtet ist, wobei die Steuerungsvorrichtung (14) dazu eingerichtet ist, von einer Detektionseinrichtung (45) generierte Daten zu empfangen und auszuwerten, welche zumindest die Position der Überladeeinrichtung (13) umfassen, und in Abhängigkeit von der Auswertung der Daten der Detektionseinrichtung (45) die Steuersignale zur Anpassung der Weite des Erntegutdurchgangsspaltes (31) zu generieren.

## Beschreibung

Die vorliegende Erfindung betrifft eine selbstfahrende landwirtschaftliche Erntemaschine gemäß dem Oberbegriff des Anspruches 1. Weiterhin betrifft die vorliegende Erfindung ein Verfahren zum Betreiben einer selbstfahrenden landwirtschaftlichen Erntemaschine gemäß dem Oberbegriff des Anspruches 15.

Eine selbstfahrende landwirtschaftliche Erntemaschine der eingangs genannten Art ist aus der EP 1 380 204 A1 bekannt. Darin ist eine als Feldhäcksler ausgeführte landwirtschaftliche Erntemaschine beschrieben, die zumindest ein Nachbeschleunigungsorgan zur veränderlichen Beschleunigung von Erntegut und eine dem Nachbeschleunigungsorgan nachgeordnete Überladeeinrichtung zum Auswerfen des Ernteguts in einen Ladebehälter umfasst. Zur veränderlichen Beschleunigung des Erntegutes ist die Weite eines Erntegutdurchgangsspaltes des Nachbeschleunigungsorgans, welcher sich zwischen dem Nachbeschleunigungsorgan und einer diesem gegenüberliegenden Wandung eines Förderkanals ausbildet, mittels einer Spaltänderungsvorrichtung anpassbar. Der Spaltänderungsvorrichtung ist eine Steuerungsvorrichtung zugeordnet, die zur Ansteuerung der Spaltänderungsvorrichtung durch von der Steuerungsvorrichtung generierte Steuersignale eingerichtet ist. Hierzu ist es aus der EP 1 380 204 A1 bekannt, die Weite des Erntegutdurchgangsspaltes in Abhängigkeit vom Erntegutdurchsatz, der mittels Sensoren zur Messung der Feuchtigkeit, der Dichte und der Geschwindigkeit des Erntegutes bestimmt wird, zu verstellen. Die Sensoren sind innerhalb der Erntemaschine entlang der Gutförderstrecke zwischen einem Einzugsorgan und der Überladeeinrichtung angeordnet. Die Reaktion auf Änderungen im Erntegutstrom erfolgt mithin stets zeitlich versetzt. Zudem führt die zunehmende Fahrgeschwindigkeit, mit der eine Erhöhung der Flächenleistung der Erntemaschine einhergeht, während des Erntevorgangs zu einer weiteren Reduzierung der Reaktionszeit auf sich ändernde Erntebedingungen oder Erntesituationen.

Die DE 10 2020 002 864 A1 beschreibt eine als Feldhäcksler ausgeführte landwirtschaftliche Erntemaschine, mit zumindest einem Nachbeschleunigungsorgan zur Beschleunigung von Erntegut und mit einer dem Nachbeschleunigungsorgan nachgeordneten, um eine vertikal verlaufende und horizontal verlaufene Achse schwenkbaren Überladeeinrichtung, an welcher am auswurfseitigen Ende eine beweglich angeordnete Auswurfklappe angeordnet ist, zum Auswerfen des Ernteguts in einen Ladebehälter. Das Nachbeschleunigungsorgan dient bei der Grasernte der Beschleunigung des Erntegutes, indem sich das Nachbeschleunigungsorgan in einer Beschleunigungsposition befindet, in der das Nachbeschleunigungsorgan in den Förderkanal hineinragt. Bei der Maisernte befindet sich das Nachbeschleunigungsorgan in einer passiven Position, in welcher das Nachbeschleunigungsorgan aus dem Förderkanal nahezu ausgestellt ist und als Gebläse wirkt. In der passiven Position wirkt das Nachbeschleunigungsorgan geringfügig mechanisch mit dem Erntegut zusammen. Das Umschalten zwischen der Beschleunigungsposition und der passiven Position erfolgt in Abhängigkeit von dem Vorhandensein einer Konditioniereinrichtung zum Aufbereiten von Maiskörnern.

Ausgehend von dem vorstehend genannten Stand der Technik ist es demnach die Aufgabe der vorliegenden Erfindung, eine landwirtschaftliche Erntemaschine der eingangs genannten Art weiterzubilden, die sich durch eine verbesserte Anpassung der Einstellung des Nachbeschleunigungsorgans an sich ändernde Bedingungen in verschiedenen Überladesituationen auszeichnet.

Diese Aufgabe wird erfindungsgemäß durch die Merkmale des unabhängigen Patentanspruchs 1 gelöst, wobei vorteilhafte Weiterbildungen der erfindungsgemäßen Erntemaschine Gegenstand der entsprechenden abhängigen Patentansprüche 2 bis 14 sind.

Gemäß dem Anspruch 1 wird eine selbstfahrende landwirtschaftliche Erntemaschine, insbesondere ein Feldhäcksler, vorgeschlagen, mit zumindest einem Nachbeschleunigungsorgan zur veränderlichen Beschleunigung von Erntegut und mit einer dem Nachbeschleunigungsorgan nachgeordneten Überladeeinrichtung, an welcher am auswurfseitigen Ende eine bewegliche Auswurfklappe angeordnet ist, zum Auswerfen des Ernteguts in einen Ladebehälter, wobei die Überladeeinrichtung um eine vertikal verlaufende Achse und eine horizontal verlaufene Achse schwenkbar ist, wobei zur veränderlichen Beschleunigung des Erntegutes die Weite eines Erntegutdurchgangsspaltes des Nachbeschleunigungsorgans mittels einer Spaltänderungsvorrichtung anpassbar ist, wobei der Spaltänderungsvorrichtung eine Steuerungsvorrichtung zugeordnet ist, die zur Ansteuerung der Spaltänderungsvorrichtung durch von der Steuerungsvorrichtung generierte Steuersignale eingerichtet ist. Erfindungsgemäß ist vorgesehen, dass die Steuerungsvorrichtung dazu eingerichtet ist, von einer Detektionseinrichtung generierte Daten zu empfangen und auszuwerten, welche zumindest die Position der Überladeeinrichtung umfassen, und in Abhängigkeit von der Auswertung der Daten der Detektionseinrichtung die Steuersignale zur Anpassung der Weite des Erntegutdurchgangsspaltes zu generieren.

Der Erfindung liegt die Überlegung zugrunde, in Abhängigkeit von der detektierten Position der Überladeeinrichtung eine Änderung einer Überladesituation zu bestimmen, um darauf zeitnäher, d.h. vorausschauender, reagieren zu können. So erfordert das seitliche Überladen von Erntegut, d.h. auf einen im Wesentlichen parallel zur Erntemaschine positionierten Ladewagen oder Anhänger, in der Regel aufgrund der geringen Wurfdistanz eine geringere Nachbeschleunigungsleistung als das Überladen auf einen hinter der Erntemaschine positionierten Ladewagen oder Anhänger, bei dem sich, bedingt durch ein den Ladewagen ziehendes Zugfahrzeug, eine größere Wurfdistanz einstellt.

Die Steuerungsvorrichtung kann Bestandteil einer Steuer- und Regelungseinheit der Erntemaschine sein, welche darüberhinausgehende Aufgaben übernimmt, oder als eine separate Steuereinheit ausgeführt sein, die mit einer übergeordneten Steuer- und Regelungseinheit der Erntemaschine verbunden ist.

Die Weite des Erntegutdurchgangsspaltes des Nachbeschleunigungsorgans bezeichnet den Abstand zwischen dem Nachbeschleunigungsorgan und einer diesem gegenüberliegenden Wandung eines Förderkanals der Erntemaschine.

Bevorzugt kann die Überladeeinrichtung durch einen Aktuator um die vertikal verlaufende Achse und/oder mittels zumindest eines Linearaktors um die horizontal verlaufende Achse voneinander unabhängig schwenkbar sein. Zudem kann die Auswurfklappe durch einen Aktuator um eine horizontal verlaufende Schwenkachse verschwenkbar sein. Das Verstellen der Überladeeinrichtung einschließlich der Auswurfklappe dient dazu, die Wurfweite zum Erreichen des Ladewagens oder Anhängers und den Auftreffpunkt im Ladewagen bzw. Anhänger einzustellen. Insbesondere kann die Steuerungsvorrichtung zur Ansteuerung der Aktuatoren und des Linearaktors eingerichtet sein.

Insbesondere kann die Detektionseinrichtung einen Drehwinkelsensor zur Erfassung eines Drehwinkels sowie einen Höhensensor zur Erfassung eines Höhenschwenkwinkels der Überladeeinrichtung und einen Winkelsensor zur Erfassung eines Schwenkwinkels der Auswurfklappe umfassen, wobei die Steuerungsvorrichtung zumindest einen dieser Parameter zur Bestimmung der Position der Überladeeinrichtung auswertet. Somit kann die Detektionseinrichtung die Daten generieren, welche zumindest die räumliche Position der Überladeeinrichtung einschließlich der Position der Auswurfklappe relativ zur Überladeeinrichtung umfassen.

Gemäß einer bevorzugten Weiterbildung kann an der Überladevorrichtung eine optische Sensoranordnung angeordnet sein, welche zur Bestimmung der Position und/oder der Art des Ladebehälters und/oder zur Bestimmung eines Auftreffpunkts des Ernteguts in dem Ladebehälter eingerichtet ist. Mittels der optischen Sensoranordnung lässt sich bestimmen, in welchem Abstand sich der Ladebehälter zur Erntemaschine befindet und welche räumliche Position der Ladebehälter relativ zu der Erntemaschine einnimmt.

Insbesondere kann an der Überladevorrichtung zumindest ein Sensor angeordnet sein, welcher Eigenschaften des Erntegutes detektiert und entsprechende Daten an die Steuerungsvorrichtung überträgt. Bei dem zumindest einen zur Detektion von Ernteguteigenschaften eingerichteten Sensor kann es sich um einen NIR-Sensor und/oder einen Feuchtigkeitssensor handeln. Während der Feuchtigkeitssensor lediglich die Feuchtigkeit des Erntegutes detektiert, detektiert ein NIR-Sensor darüberhinausgehende Informationen zu Eigenschaften des Erntegutes.

Bevorzugt kann die Spaltänderungsvorrichtung dazu eingerichtet sein, die Weite des Erntegutdurchgangsspaltes auf einen Minimalwert von 2 mm bis zu einem Maximalwert von 80 mm einzustellen. Der Minimalwert für die Weite des Erntegutdurchgangsspaltes führt, bei gegebener Antriebsdrehzahl des Nachbeschleunigungsorgans, zu einer maximalen Beschleunigung des Erntegutes. Insbesondere kann die Spaltänderungsvorrichtung dazu eingerichtet sein, die Weite des Erntegutdurchgangsspaltes stufenlos einzustellen.

Gemäß einer bevorzugten Weiterbildung kann die Spaltänderungsvorrichtung eine Verstellcharakteristik mit einem im Wesentlichen progressiv ansteigenden Verlauf der Einstellung der Weite des Erntegutdurchgangsspaltes aufweisen. Der Vorteil einer solchen Spaltänderungsvorrichtung besteht darin, dass bei einer Einstellung kleiner Abstandswerte, insbesondere kleiner oder gleich 30 mm, für die Weite des Erntegutspaltes eine sehr präzise Einstellung durch die Spaltänderungsvorrichtung ermöglicht wird, während mit der Einstellung zunehmender Abstandswerte, insbesondere größer 30 mm, für die Weite die Veränderung schneller durch die Ansteuerung der Spaltänderungsvorrichtung erreicht wird. Ersteres ist für trockenes Erntegut und/oder geringe Erntegutdurchsätze relevant, die beispielsweise auf eine Unregelmäßigkeit in der Form des Schwads, Unregelmäßigkeiten im Maisbestand oder Ganzpflanzen-Bestand, eine Lücke im Schwad oder das Anschneiden bzw. das Erreichen eines Vorgewendes zurückgehen können. Letzteres ist für im Wesentlichen gleichmäßige größere Erntegutdurchsätze und bei Mais beim seitlichen Überladen relevant, um die Leistungsaufnahme des Nachbeschleunigungsorgans zu optimieren und um Verstopfungen zu vermeiden. Auch wird dies beim Überladen nach hinten auf einen Ladewagen bzw. Anhänger relevant.

Insbesondere kann die Steuerungsvorrichtung dazu eingerichtet sein, die Spaltänderungsvorrichtung derart anzusteuern, um die Weite des Erntegutdurchgangsspaltes mit zunehmender Trockenheit des Erntegutes und/oder abnehmendem Erntegutdurchsatz zu reduzieren. Eine zunehmende Trockenheit und/oder eine Abnahme des Erntegutdurchsatzes erfordern eine Reduzierung der Weite des Erntegutdurchgangsspaltes, um ein sicheres Überladen in den Ladebehälter zu gewährleisten.

Insbesondere kann die Steuerungsvorrichtung zur automatischen Ansteuerung der Spaltänderungsvorrichtung eingerichtet sein. Dadurch kann der Bediener der Erntemaschine entlastet werden. Zudem ist durch die Automatisierung eine zeitnähere und präzisere Ansteuerung und Einstellung der Weite des Erntegutdurchgangsspaltes möglich, um den Betrieb des Nachbeschleunigungsorgans effizient zu gestalten.

Gemäß einer Weiterbildung kann die Steuerungsvorrichtung eine Speichereinheit umfassen, in der zumindest eine Kennlinie oder ein Kennlinienfeld für die einzustellende Weite des Erntegutdurchgangsspaltes in Abhängigkeit von der Position der Überladeeinrichtung, der Position des Ladebehälters und des Auftreffpunktes hinterlegt ist, und dass die Steuerungsvorrichtung eine Recheneinheit umfassen kann, welche die zumindest eine Kennlinie oder das zumindest eine Kennlinienfeld zur Ansteuerung der Spaltänderungsvorrichtung auswertet. Dabei bilden zumindest die von der Detektionseinrichtung bereitgestellten Daten gemäß dem Anspruch 4 Eingangsgrößen und die einzustellende Spaltweite bildet die Ausgangsgröße. Daten des zumindest einen Sensors, der zur Detektion von Eigenschaften des Erntegutes eingerichtet ist, und/oder der optischen Sensoranordnung, mittels der Position des Ladebehälters und/oder Auftreffpunkt im Ladebehälter bestimmt werden, können zusätzlich Eingangsgrößen bilden.

Gemäß einer bevorzugten Weiterbildung kann in der Speichereinheit zumindest ein relativer oder absoluter Schwellwert für eine Änderung der Position der Überladeeinrichtung hinterlegt sein, dessen Überschreiten die Steuerungsvorrichtung als Indikator zur Anpassung der Weite des Erntegutdurchgangsspaltes interpretiert. Ein solcher Schwellwert kann vorgesehen sein, um eine Regelung der Spaltänderungsvorrichtung aufgrund von Schwenkbewegungen der Überladeeinrichtung, die der Anpassung des Auftreffpunktes während eines laufenden Überladevorgangs, insbesondere bei einem seitlichen Überladen, dienen, zu vermeiden.

Bevorzugt kann das Nachbeschleunigungsorgan eine Drehachse aufweisen, die endseitig in Führungen gelagert ist, die an Seitenwänden eines das Nachbeschleunigungsorgan zumindest abschnittsweise ummantelnden Gehäuses angeordnet sind, wobei die Spaltänderungsvorrichtung zur, insbesondere translatorischen, Bewegung des Nachbeschleunigungsorgans eine Aktorik umfasst, mittels der die Weite des Erntegutdurchgangsspaltes veränderbar ist. Denkbar ist auch eine Schwenkbewegung des Nachbeschleunigungsorgans, um die Weite des Erntegutdurchgangsspaltes zu verändern.

Dazu kann die Aktorik mechanisch, hydraulisch und/oder elektromechanisch betätigbare Antriebselemente umfassen. Als zumindest ein hydraulisch und/oder elektromechanisch betätigbares Antriebselement kann beispielsweise zumindest ein Hydraulikzylinder oder zumindest ein Linearmotor vorgesehen sein. Als mechanisch betätigbare Antriebselemente können beispielsweise zumindest eine Hebelanordnung sowie eine Welle vorgesehen sein. Das zumindest eine hydraulisch und/oder elektromechanisch betätigbare Antriebselement kann an einem ersten Anlenkpunkt an der Welle angreifen und diese um eine ortsfeste Drehachse schwenken. Die zumindest eine Hebelanordnung kann an einem zum ersten Anlenkpunkt beabstandeten zweiten Anlenkpunkt an der Welle angreifen, sodass die Bewegung des hydraulisch und/oder elektromechanisch betätigbaren Antriebselementes auf die Hebelanordnung übertragen wird. Der erste Anlenkpunkt und der zweite Anlenkpunkt können an einander gegenüberliegenden Stellen der Welle angeordnet sein.

Vorteilhaft übermittelt ein dem Nachbeschleunigungsorgan und/oder der Aktorik zugeordneter Sensor das jeweilige Stellmaß an die Steuerungsvorrichtung.

Gemäß einer Weiterbildung kann die Steuerungsvorrichtung dazu eingerichtet sein, mittels eines Positionsortungssensors das Erreichen eines Vorgewendes zu bestimmen und in Abhängigkeit von einem sensorisch bestimmten Erntegutdurchsatz die Weite des Erntegutdurchgangsspaltes mit abnehmendem Erntegutdurchsatz zu reduzieren und zumindest für die Dauer des Durchfahrens des Vorgewendes die veränderte Weite des Erntegutdurchgangsspaltes unabhängig von einer zwischenzeitlichen Änderung der Position der Überladevorrichtung beizubehalten. Damit kann dem Umstand Rechnung getragen werden, dass die Überladeeinrichtung während des Durchfahrens eines Vorgewendes aus ihrer bisherigen Überladeposition, beispielsweise zur Seite oder nach hinten, in eine hiervon abweichende neue Überladeposition bewegt wird. Während sich beim Anschneiden der Ladebehälter bzw. Anhänger in der Regel hinter der Erntemaschine befindet, kann dieser nach dem Durchfahren des ersten Vorgewendes seitlich von der Erntemaschine positioniert werden, wodurch sich die Wurfweite reduziert. Wie beim Ausfahren aus dem Erntegutbestand auch, ist mit dem erneuten Einfahren in den Erntegutbestand der Erntegutdurchsatz anfänglich entsprechend gering, was zunächst eine höhere Beschleunigung des Erntegutes für ein zuverlässiges Überladen erfordert, bis sich ein kontinuierlicherer Erntegutdurchsatz einstellt.

Entsprechend kann der Bediener davon entlastet werden, die Einstellung der Weite des Erntegutdurchgangsspaltes bei Änderungen der Position der Überladeeinrichtung selbsttätig vornehmen zu müssen. Die Steuerungsvorrichtung passt die Weite des Erntegutdurchgangsspaltes beim Erreichen und Verlassen eines Vorgewendes automatisch an bzw. behält diese für die Dauer des Durchfahrens des Vorgewendes bei.

Bevorzugt kann die Steuerungsvorrichtung dazu eingerichtet sein, für ein Anschneiden eines Feldbestands automatisch die Weite des Erntegutdurchgangsspaltes auf eine für die zu erntende Erntegutart spezifische minimale Weite einzustellen.

Die erfindungsgemäße Aufgabe wird ferner durch ein Verfahren zum Betreiben einer selbstfahrenden landwirtschaftlichen Erntemaschine, insbesondere eines Feldhäckslers, mit zumindest einem Nachbeschleunigungsorgan zur veränderlichen Beschleunigung von Erntegut und mit einer dem Nachbeschleunigungsorgan nachgeordneten Überladeeinrichtung, welche am auswurfseitigen Ende eine beweglich angeordnete Auswurfklappe umfasst, wobei die Überladeeinrichtung um eine vertikal verlaufende Achse und eine horizontal verlaufende Achse schwenkbar ist, wobei zur veränderlichen Beschleunigung des Erntegutes die Weite eines Erntegutdurchgangsspaltes des Nachbeschleunigungsorgans mittels einer Spaltänderungsvorrichtung angepasst wird, wobei die Spaltänderungsvorrichtung durch von einer Steuerungsvorrichtung generierte Steuersignale angesteuert wird, gemäß dem unabhängigen Anspruch 15 gelöst.

Erfindungsgemäß ist vorgesehen, dass die Steuerungsvorrichtung von einer Detektionseinrichtung generierte Daten auswertet, welche zumindest die Position der Überladeeinrichtung umfassen, und dass die Steuerungsvorrichtung in Abhängigkeit von der Auswertung die Steuersignale zur Anpassung der Weite des Erntegutdurchgangsspaltes generiert. Das Verfahren zeichnet sich dadurch aus, dass anhand der Position der Überladeeinrichtung auf die Überladesituation geschlossen wird, d.h. seitliches Überladen mit geringerer Wurfweite oder Überladen nach hinten mit größerer Wurfweite. Entsprechend der Überladesituation muss eine geringere oder eine höhere Wurfleistung durch das Nachbeschleunigungsorgan bereitgestellt werden, was durch die entsprechende Anpassung der Weite des Erntegutdurchgangsspaltes beeinflusst wird. Auf die erfindungsgemäßen Vorteile der landwirtschaftlichen Erntemaschine darf verwiesen werden.

Die vorliegende Erfindung wird nachstehend anhand eines in den Zeichnungen dargestellten Ausführungsbeispieles näher erläutert.

Es zeigen:
- Fig. 1: eine schematische Darstellung einer als selbstfahrender Feldhäcksler ausgeführten landwirtschaftlichen Erntemaschine in Seitenansicht;
- Fig. 2: schematisch und exemplarisch eine Seitenansicht eines Nachbeschleunigungsorgans der Erntemaschine in einer Position mit minimaler Weite eines Erntegutdurchgangsspaltes;
- Fig. 3: schematisch und exemplarisch eine Seitenansicht des Nachbeschleunigungsorgans gemäß Fig. 2 in einer Position mit maximaler Weite des Erntegutdurchgangsspaltes;
- Fig. 4: schematisch und exemplarisch eine vereinfachte Darstellung eines Überladevorgangs, bei welchem nach hinten überladen wird, sowie eine hiermit korrespondierende Einstellung der Weite des Erntegutdurchgangsspaltes des Nachbeschleunigungsorgans; und
- Fig. 5: schematisch und exemplarisch eine vereinfachte Darstellung eines Überladevorgangs, bei welchem zur Seite überladen wird, sowie eine hiermit korrespondierende Einstellung der Weite des Erntegutdurchgangsspaltes des Nachbeschleunigungsorgans.

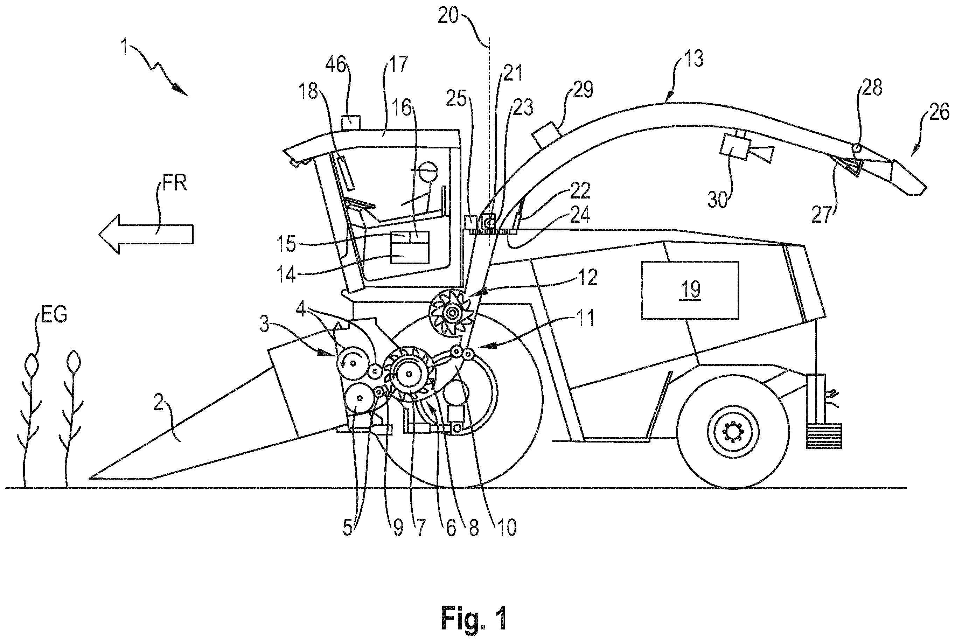

In Fig. 1 ist eine als Feldhäcksler ausgeführte selbstfahrende landwirtschaftliche Erntemaschine 1 abgebildet, an welcher im frontseitigen Bereich zur Aufnahme von Erntegut EG ein Vorsatzgerät 2 angeordnet ist. Das Vorsatzgerät 2 variiert in Abhängigkeit von der zu erntenden bzw. aufzunehmenden Erntegutart. Das Vorsatzgerät 2 nimmt das Erntegut EG vom Feld auf und fördert es einem Einzugsorgan 3 zu, das im dargestellten Ausführungsbeispiel aus einer Walzengruppe mit oberen und unteren Einzugswalzen 4, 5 besteht. Die Einzugswalzen 4, 5 des Einzugsorgans 3 üben eine Presskraft auf das aufgenommene Erntegut aus. Das Einzugsorgan 3 fördert das zu einer Erntegutmatte verdichtete Erntegut EG einer Häckselvorrichtung 6 zu, welche eine rotierend angetriebene Häckseltrommel 7 mit über deren Umfang verteilt angeordneten Häckselmessern 8 aufweist. Die Häckselmesser 8 schneiden die von dem Einzugsorgan 3 zugeführte Erntegutmatte an einer Gegenschneide 9. Das geschnittene bzw. gehäckselte Erntegut EG gelangt durch die Rotationsbewegung der Häckseltrommel 7 in einen nachgeordneten Förderkanal 10, von wo es je nach Ausstattung des Feldhäckslers 1 durch eine optional im Gutflussweg angeordnete Nachbearbeitungsvorrichtung 11, auch als Konditioniervorrichtung oder Corncracker bezeichnet, aufbereitet und von einem nachgeordneten Nachbeschleunigungsorgan 12 zusätzlich beschleunigt durch eine verstellbare Überladeeinrichtung 13 in ein mitgeführtes Transportfahrzeug gefördert wird. Die optionale Nachbearbeitungsvorrichtung 11 kann wahlweise aus dem Gutflussweg ausgeschwenkt oder vollständig entfernt werden. Die Überladeeinrichtung 13 ist um eine vertikal verlaufende Achse 20 drehbar, beispielsweise mittels eines Drehkranzes. Zusätzlich und unabhängig davon ist die Überladeeinrichtung 13 um eine horizontal verlaufende Achse 21 schwenkbar. Am freien Ende der Überladeeinrichtung 13 kann eine sogenannte Auswurfklappe 26 angeordnet sein, welche gegenüber der Überladeeinrichtung 13 um eine horizontal verlaufende Achse schwenkbar ist.

Zum Antreiben der Arbeitsaggregate der Erntemaschine 1, d.h. von Vorsatzgerät 2, Einzugsorgan 3, Häckselvorrichtung 6, optional der Nachbearbeitungsvorrichtung 11, sowie dem Nachbeschleunigungsorgan 12, ist ein Antriebsmotor 19 vorgesehen. Die Arbeitsaggregate können durch einen - nicht dargestellten - Hauptantriebsstrang, mit der Motorabtriebswelle des Antriebsmotors 19 verbunden sein. Der Antriebsmotor 19 dient auch zum Betreiben eines hydrodynamischen Fahrantriebs des Feldhäckslers 1.

Die Erntemaschine 1 umfasst eine Fahrerkabine 17, in der eine Eingabe-Ausgabe-Einheit 18 angeordnet ist. Weiterhin umfasst die Erntemaschine 1 eine Steuerungsvorrichtung 14, welche eine Speichereinheit 15 zum Hinterlegen von Daten und eine Recheneinheit 16 zur Verarbeitung der in der Speichereinheit 15 hinterlegten Daten umfasst. Die Steuerungsvorrichtung 14 ist dazu eingerichtet, einen Bediener der Erntemaschine 1 bei der Bedienung derselben zu unterstützen. Die Steuerungsvorrichtung 14 ist dabei zur Ansteuerung zumindest des Nachbeschleunigungsorgans 12 eingerichtet.

Die Überladeeinrichtung 13, auch als Auswurfkrümmer bezeichnet, ist um die vertikal verlaufende Achse 20 seitlich drehbar und um die horizontal verlaufende Achse 21 höhenverstellbar gegenüber dem Rahmen der Erntemaschine 1 gelagert. Ein zwischen dem Rahmen und der Überladeeinrichtung 13 wirkender Linearaktor 22, hier und vorzugsweise zumindest ein Hubzylinder, dient zur Verstellung der Höhe der Überladeeinrichtung 13. Ein Höhensensor 23 in Form eines Drehpotentiometers erfasst den jeweiligen Höhenschwenkwinkel. Mittels einer Aktorik 24, hier und vorzugsweise eines antreibbaren Drehkranzes, lässt sich die Überladeeinrichtung 13 gegenüber dem Rahmen der Erntemaschine 1 drehen. Ein Drehwinkelsensor 25 in Form eines Drehpotentiometers erfasst den jeweiligen Drehwinkel der Überladeeinrichtung 13.

Am maschinenabgewandten Ende der Überladeeinrichtung 13 ist die Auswurfklappe 26 angeordnet, durch deren Verschwenkbarkeit sich der Auswurfwinkel des Ernteguts EG aus der Überladeeinrichtung 13 - und damit auch die erzielte Wurfweite - kurzfristig beeinflussen lässt. Die Verstellung wird durch einen Aktuator 27, hier und vorzugsweise einen hydraulischen Stellzylinder, bewirkt, wobei ein der Auswurfklappe 26 zugeordneter Winkelsensor 28, ebenfalls in Form eines Drehpotentiometers, die Stellung der Auswurfklappe 26 erfasst.

Des Weiteren kann entlang des Erntegutstroms zumindest ein Sensor 29 angeordnet sein, welcher Eigenschaften des aufgenommenen Erntegutes EG detektiert. Bei dem zumindest einen einem entlang des Erntegutstroms angeordneten Sensor 29 kann es sich bevorzugt um einen NIR-Sensor und/oder einen Feuchtigkeitssensor handeln Die Anordnung des zumindest einen Sensors 29 entlang des Erntegutstroms kann an beliebiger Stelle innerhalb der Erntemaschine 1 erfolgen. Eine bevorzugte Anordnung des zumindest einen Sensors 29 kann an der Überladeeinrichtung 13 vorgesehen sein. Während der Feuchtigkeitssensor lediglich die Feuchtigkeit des Erntegutes EG detektiert, detektiert ein NIR-Sensor darüberhinausgehende Informationen von Eigenschaften des Erntegutes EG.

Zur optischen Erfassung eines erreichten Auftreffpunkts des im Erntebetrieb ausgeworfenen Ernteguts EG sowie ggf. zur optischen Erfassung weiterer Merkmale wie der Lage, Form, Abmessung, eines Befüllzustands etc. eines Ladebehälters 47 oder Anhängers, ist an der Überladeeinrichtung 13 eine auf einen Wurfzielbereich der Überladeeinrichtung 13 ausgerichtete optische Sensoranordnung 30 angebracht. Bei der Sensoranordnung 30 kann es sich bevorzugt um eine Stereokamera handeln, die unter anderem betreibbar ist, aus aufgenommenen Bildern den Abstand optisch erfasster Objekte zu ermitteln. Insbesondere eignet sich die Sensoranordnung 30 zur Ermittlung einer Wurfweite des durch die Überladeeinrichtung 13 ausgeworfenen Ernteguts EG. Alternativ oder ergänzend könnte an einer weiteren Stelle, beispielsweise in der Nähe des Wurfziels, ein optischer Sensor angeordnet sein.

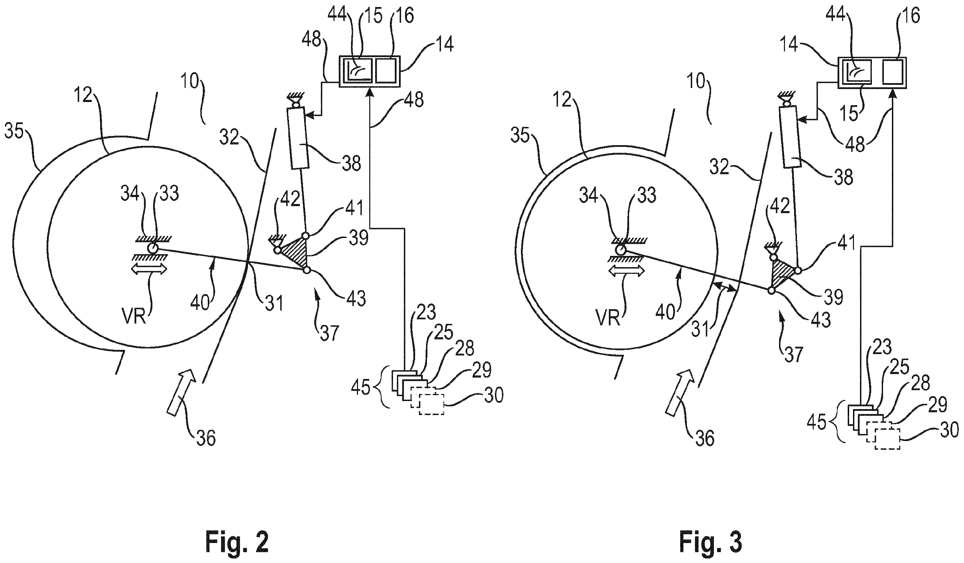

In Fig. 2 ist schematisch und exemplarisch eine Seitenansicht des Nachbeschleunigungsorgans 12 der Erntemaschine 1 in einer Position mit minimaler Weite eines Erntegutdurchgangsspaltes 31 dargestellt. Die minimale Weite des einstellbaren Erntegutdurchgangsspaltes 31 beträgt etwa 2 mm.

Die Darstellung in Fig. 3 zeigt schematisch und exemplarisch eine Seitenansicht des rotierend angetriebenen Nachbeschleunigungsorgans 12 gemäß Fig. 2 in einer Position mit maximaler Weite des Erntegutdurchgangsspaltes 31. Die maximale Weite des einstellbaren Erntegutdurchgangsspaltes 31 beträgt etwa 80 mm.

Die Weite des einstellbaren Erntegutdurchgangsspaltes 31 des Nachbeschleunigungsorgans 12 bezeichnet den Abstand zwischen dem Nachbeschleunigungsorgan 12 respektive dessen Hüllkreis und einer diesem gegenüberliegenden Wandung 32 des Förderkanals 10 der Erntemaschine 1.

Das Nachbeschleunigungsorgan 12 weist eine Drehachse 33 auf, um welche das Nachbeschleunigungsorgan 12 rotierend antreibbar ist. Die Drehachse 33 ist endseitig in Führungen 34 verschiebbar gelagert. Der Pfeil VR veranschaulicht mögliche Verstellrichtungen. Die Führungen 34 sind an Seitenwänden, die ein das Nachbeschleunigungsorgan 12 zumindest abschnittsweise ummantelndes Gehäuse 35 begrenzen, angeordnet. Die Seitenwände können Teil des Gehäuses 35 sein.

Zur veränderlichen Beschleunigung des entlang des Förderkanals 10 geförderten Erntegutes (Pfeil 36) ist die Weite des Erntegutdurchgangsspaltes 31 des Nachbeschleunigungsorgans 12 mittels einer Spaltänderungsvorrichtung 37 anpassbar. Der Spaltänderungsvorrichtung 37 ist die Steuerungsvorrichtung 14 zugeordnet, die zur Ansteuerung der Spaltänderungsvorrichtung 37 durch von der Steuerungsvorrichtung 14 generierter Steuersignale eingerichtet ist.

Die Spaltänderungsvorrichtung 37 umfasst gemäß der dargestellten Ausführungsform zur, insbesondere translatorischen, Bewegung (Pfeil VR) des Nachbeschleunigungsorgans 12 eine Aktorik, mittels der die Weite des Erntegutdurchgangsspaltes 31 veränderbar ist. Durch die Änderung der Weite des Erntegutdurchgangsspaltes 31 wird auf unterschiedliche Betriebssituationen reagiert, in welchen eine unterschiedliche Beschleunigung des Erntegutes EG durch das Nachbeschleunigungsorgan 12 erforderlich ist.

Die Aktorik der Spaltänderungsvorrichtung 37 umfasst mechanisch, hydraulisch und/oder elektromechanisch betätigbare Antriebselemente 38, 39 40. Im dargestellten Ausführungsbeispiel umfasst die Spaltänderungsvorrichtung 37 zumindest einen Hydraulikzylinder 38, eine Welle 39 sowie zumindest eine Hebelanordnung 40 als Antriebselemente.

Das zumindest eine hydraulisch und/oder elektromechanisch betätigbare Antriebselement, hier und vorzugsweise der zumindest eine Hydraulikzylinder 38, kann an einem ersten Anlenkpunkt 41 an der Welle 39 angreifen und diese um eine ortsfeste Drehachse 42 schwenken. Die Hebelanordnung 40 greift an einem zum ersten Anlenkpunkt 41 beabstandeten zweiten Anlenkpunkt 43 an der Welle 39 an, sodass die Bewegung des zumindest einen Hydraulikzylinders 38 auf die Hebelanordnung 40 übertragen wird. Der erste Anlenkpunkt 41 und der zweite Anlenkpunkt 43 können an einander gegenüberliegenden Stellen der Welle 39 angeordnet sein. Bevorzugt sind zwei zueinander beabstandet angeordnete hydraulisch und/oder elektromechanisch betätigbare Antriebselemente, hier und vorzugsweise zwei Hydraulikzylinder 38, vorgesehen, welche in Endbereichen der Welle 39 an dieser angreifen. Das Vorsehen zweier hydraulisch und/oder elektromechanisch betätigbarer Antriebselemente ermöglicht eine gleichmäßigere Verstellung der Welle 39.

Das Einfahren der Kolbenstange des zumindest einen Hydraulikzylinders 38 bewirkt ein Drehen oder Schwenken der Welle 39 gegen den Uhrzeigersinn, wodurch die Drehachse 33 des Nachbeschleunigungsorgan 12 in Richtung der Wandung 32 bewegt wird, bis die minimal einstellbare Weite des Erntegutdurchgangsspaltes 31 erreicht ist, wie in Fig. 2 dargestellt.

Das Ausfahren der Kolbenstange des Hydraulikzylinders 38 bewirkt ein Drehen oder Schwenken der Welle 39 im Uhrzeigersinn, wodurch die Drehachse 33 des Nachbeschleunigungsorgans 12 zur Wandung 32 zunehmend beabstandet wird, bis die maximal einstellbare Weite des Erntegutdurchgangsspaltes 31 erreicht ist, wie in Fig. 3 dargestellt.

Wesentlich ist, dass die Spaltänderungsvorrichtung 37 eine Verstellcharakteristik mit einem im Wesentlichen progressiv ansteigenden Verlauf der Einstellung der Weite des Erntegutdurchgangsspaltes 31 aufweist. Der Vorteil einer derart ausgeführten und ansteuerbaren Spaltänderungsvorrichtung 37 besteht darin, dass bei einer Einstellung kleiner Werte für die Weite des Erntegutspaltes 31 eine sehr präzise Einstellung durch die Spaltänderungsvorrichtung 37 ermöglicht wird, während mit der Einstellung zunehmender Werten für die Weite die Veränderung schneller durch die Ansteuerung der Spaltänderungsvorrichtung 37 erreicht wird. Dabei ist eine präzise Einstellung kleiner Abstandswerte für die Weite des Erntegutdurchgangsspaltes 31 für trockenes Erntegut und/oder für geringe Erntegutdurchsätze relevant. Die präzise Einstellung kleiner Abstandswerte für die Weite des Erntegutdurchgangsspaltes 31 ermöglicht bei trockenem Erntegut und/oder geringem Erntegutdurchsatz eine optimale Beschleunigung und einen energieeffizienteren Betrieb der des Nachbeschleunigungsorgans 12. Das vor allem schnelle Einstellen großer Abstandswerte für die Weite des Erntegutdurchgangsspaltes 31 ist relevant, um auf eine sprunghafte Zunahme der Erntegutdurchsätze, wie sie nach kurz dem Einfahren in den Bestand auftreten, reagieren zu können sowie um den Energieverbrauch zu optimieren.

Die Erntemaschine 1 umfasst eine Detektionseinrichtung 45. Die Detektionseinrichtung 45 generiert Daten, welche zumindest die räumliche Position der Überladeeinrichtung 13 einschließlich der Position der Auswurfklappe 26 relativ zur Überladeeinrichtung 13 umfassen. Die Detektionseinrichtung 45 umfasst dazu den Drehwinkelsensor 23 zur Erfassung des Drehwinkels, den Höhensensor 25 zur Erfassung des Höhenschwenkwinkels sowie den Winkelsensor 28 zur Erfassung des Schwenkwinkels der Auswurfklappe 26. Ergänzend können der Sensor 29 sowie die Sensoranordnung 30 von der Detektionseinrichtung 45 umfasst sein.

Die Steuerungsvorrichtung 14 ist dazu eingerichtet, von der Detektionseinrichtung 45 generierte Daten zu empfangen und auszuwerten, welche zumindest die Position der Überladeeinrichtung 13 umfassen. Die Steuerungsvorrichtung 14 ist dazu eingerichtet, in Abhängigkeit von der Auswertung der Daten der Detektionseinrichtung 45 die Steuersignale zur Anpassung der Weite des Erntegutdurchgangsspaltes 31 zu generieren.

Zur Übertragung von Daten an die Steuerungsvorrichtung 14 wird ein Bussystem 48 der Erntemaschine 1 verwendet.

In der Speichereinheit 15 kann zumindest eine Kennlinie 44 oder ein Kennlinienfeld für die einzustellende Weite des Erntegutdurchgangsspaltes 31 in Abhängigkeit von der Position der Überladeeinrichtung 13, der Position des Ladebehälters 47 und des Auftreffpunktes AP hinterlegt sein, wobei die Recheneinheit 16 zumindest eine Kennlinie 44 oder das zumindest eine Kennlinienfeld zur Ansteuerung der Spaltänderungsvorrichtung 37 auswertet. Dabei bilden zumindest die von der Detektionseinrichtung 45 bereitgestellten Daten die Eingangsgrößen und die einzustellende Spaltweite 31 bildet die Ausgangsgröße. Daten des zumindest einen Sensors 29, der zur Detektion der Eigenschaften des Erntegutes EG eingerichtet ist, und/oder die optische Sensoranordnung 30 können zusätzliche Eingangsgrößen bilden.

Weiterhin kann in der Speichereinheit 15 ein relativer oder absoluter Schwellwert für eine Änderung der Position der Überladeeinrichtung 13 hinterlegt sein, dessen Überschreiten die Steuerungsvorrichtung 14 als Indikator zur Anpassung der Weite des Erntegutdurchgangsspaltes 31 interpretiert. Ein solcher Schwellwert kann vorgesehen sein, um eine Regelung der Spaltänderungsvorrichtung 37 aufgrund von Schwenkbewegungen der Überladeeinrichtung 13, die der Anpassung des Auftreffpunktes während eines laufenden Überladevorgangs, insbesondere bei einem seitlichen Überladen, dienen, zu vermeiden.

Die Steuerungsvorrichtung 14 ist dazu eingerichtet, die Spaltänderungsvorrichtung 37 derart anzusteuern, um die Weite des Erntegutdurchgangsspaltes 31 mit zunehmender Trockenheit des Erntegutes EG und/oder abnehmendem Erntegutdurchsatz zu reduzieren. Eine zunehmende Trockenheit und/oder eine Abnahme des Erntegutdurchsatzes erfordern eine Reduzierung der Weite des Erntegutdurchgangsspaltes 31, um ein sicheres Überladen in den Ladebehälter 47 zu gewährleisten.

Bevorzugt ist die Steuerungsvorrichtung 14 zur automatischen Ansteuerung der Spaltänderungsvorrichtung 37 eingerichtet. In Verbindung mit den Daten, die durch die Detektionseinrichtung 45 generiert werden, lässt sich die Spaltänderungsvorrichtung 37 automatisch ansteuern, um das Nachbeschleunigungsorgan 12 effizient zu betreiben. Die einen im Wesentlichen progressiv ansteigenden Verlauf aufweisende Verstellcharakteristik der Spaltänderungsvorrichtung 37 ermöglicht dabei eine verbesserte Anpassung an unterschiedliche Überladebedingungen und/oder Ernteguteigenschaften. Eine feinfühligere und präzise Einstellung geringer Abstandswerte für die Weite des Erntegutdurchgangsspaltes 31 bei geringem Erntegutdurchsatz und/oder trockenem Erntegut EG und/oder einem Überladen nach hinten steht einer zunehmend schnelleren Einstellung von Abstandswerte für die Weite des Erntegutdurchgangsspaltes 31 gegenüber, wenn sich die Überladesituation dahingehend ändert, dass seitlich überladen wird.

Weiterhin kann die Steuerungsvorrichtung 14 dazu eingerichtet sein, mittels eines Positionsortungssensors 46 das Erreichen eines Vorgewendes zu bestimmen und in Abhängigkeit von einem sensorisch bestimmten Erntegutdurchsatz die Weite des Erntegutdurchgangsspaltes 31 mit abnehmendem Erntegutdurchsatz zu reduzieren und zumindest für die Dauer des Durchfahrens des Vorgewendes die veränderte Weite des Erntegutdurchgangsspaltes 31 unabhängig von einer zwischenzeitlichen Änderung der Position der Überladevorrichtung 13 beizubehalten.

Des Weiteren kann die Steuerungsvorrichtung 14 dazu eingerichtet sein, für ein Anschneiden eines Feldbestands automatisch die Weite des Erntegutdurchgangsspaltes 31 auf einen für die zu erntende Erntegutart spezifische minimale Weite einzustellen.

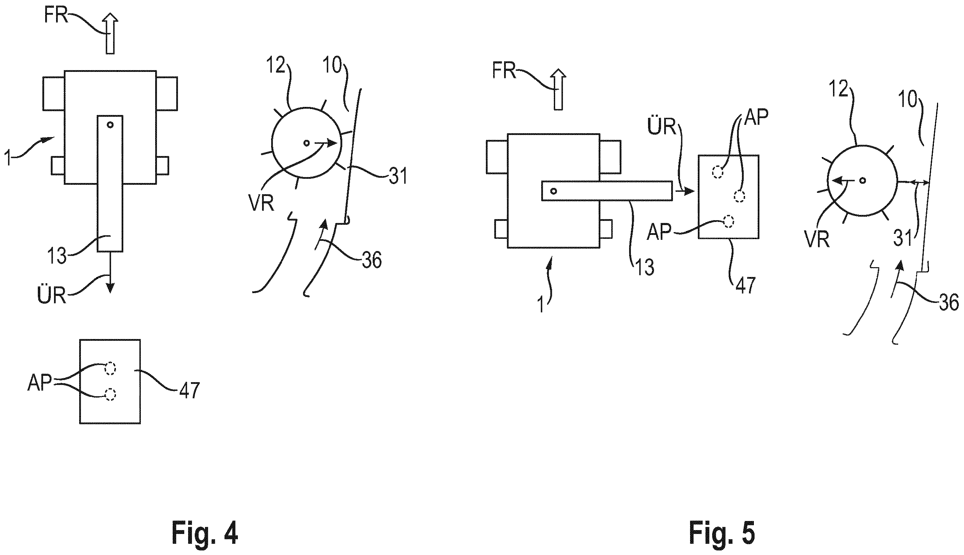

Zur beispielhaften Veranschaulichung der Ansteuerung der Spaltänderungsvorrichtung 37 in Abhängigkeit von der Position der Überladeeinrichtung ist in Fig. 4 schematisch und exemplarisch eine vereinfachte Darstellung des Überladevorgangs, bei welchem nach hinten überladen wird, sowie eine hiermit korrespondierende Einstellung der Weite des Erntegutdurchgangsspaltes 31 des Nachbeschleunigungsorgans 12 gezeigt. In Fig. 5 ist schematisch und exemplarisch eine vereinfachte Darstellung des Überladevorgangs, bei welchem zur Seite überladen wird, sowie eine hiermit korrespondierende Einstellung der Weite des Erntegutdurchgangsspaltes 31 des Nachbeschleunigungsorgans 12 gezeigt.

Ein von einem - nicht dargestellten - Zugfahrzeug gezogener Ladebehälter 47 befindet sich hinter der Erntemaschine 1, was beispielsweise beim Anschneiden eines Feldes üblich ist, wenn kein zum Erntegutbestand parallel verlaufender befahrbarer Bereich vorhanden ist. Mit FR ist die Fahrtrichtung und mit ÜR die Überladerichtung bezeichnet. Die Wurfweite ist gemäß der in Fig. 4 dargestellten Überladesituation größer, da zusätzlich über das Zugfahrzeug hinweg gefördert werden muss. Entsprechend ist die Weite des Erntegutspaltes 31 für eine stärkere Beschleunigung des Erntegutes EG durch das Nachbeschleunigungsorgan 12 auf einen geringer Wert eingestellt als bei der in Fig. 5 dargestellten Überladesituation, in der seitlich überladen wird.

Der Schwellwert für die Änderung der Position der Überladeeinrichtung 13 ist insbesondere beim seitlichen Überladen von Bedeutung, da eine Variation des Auftreffpunktes im Ladebehälter 47 unter anderem durch eine Schwenkbewegung der Überladeeinrichtung 13 um ihre vertikal verlaufende Achse 20 und/oder der Auswurfklappe 26 um ihre horizontal verlaufende Schwenkachse bewirkt wird. Eine Schwenkbewegung, welche innerhalb des durch die Sensoranordnung 30 detektierten Abmessungen des Ladebehälters 47 liegt, erfordert, zumindest unter im Wesentlichen konstanten Erntebedingungen, keine fortwährende Anpassung des Erntegutspaltes 31 als Reaktion auf eine Positionsänderung der Überladevorrichtung 13.

### Bezugszeichenliste

| | | | |
|---|---|---|---|
| 1 | Erntemaschine | 34 | Führung |
| 2 | Vorsatzgerät | 35 | Gehäuse |
| 3 | Einzugsorgan | 36 | Erntegut |
| 4 | Obere Einzugswalzen | 37 | Spaltänderungsvorrichtung |
| 5 | Untere Einzugswalzen | 38 | Antriebselement/Hydraulikzylinder |
| 6 | Häckselvorrichtung | 39 | Antriebselement/Welle |
| 7 | Häckseltrommel | 40 | Antriebselement/Hebelanordnung |
| 8 | Häckselmesser | 41 | Erster Anlenkpunkt |
| 9 | Gegenschneide | 42 | Ortsfeste Drehachse |
| 10 | Förderkanal | 43 | Zweiter Anlenkpunkt |
| 11 | Nachbearbeitungsvorrichtung | 44 | Kennlinie |
| 12 | Nachbeschleunigungsorgan | 45 | Detektionseinrichtung |
| 13 | Überladeeinrichtung | 46 | Positionsortungssensor |
| 14 | Steuerungsvorrichtung | 47 | Ladebehälter |
| 15 | Speichereinheit | 48 | Bussystem |
| 16 | Recheneinheit | AP | Auftreffpunkt |
| 17 | Fahrerkabine | EG | Erntegut |
| 18 | Eingabe-Ausgabe-Einheit | FR | Fahrtrichtung |
| 19 | Antriebsmotor | VR | Verstellrichtung |
| 20 | Achse | ÜR | Überladerichtung |
| 21 | Achse | | |
| 22 | Linearaktor | | |
| 23 | Höhensensor | | |
| 24 | Aktorik | | |
| 25 | Drehwinkelsensor | | |
| 26 | Auswurfklappe | | |
| 27 | Aktuator | | |
| 28 | Winkelsensor | | |
| 29 | Sensor | | |
| 30 | Sensoranordnung | | |
| 31 | Erntegutdurchgangsspalt | | |
| 32 | Wandung | | |
| 33 | Drehachse | | |

## Patentansprüche

1. Selbstfahrende landwirtschaftliche Erntemaschine (1), insbesondere Feldhäcksler, mit zumindest einem Nachbeschleunigungsorgan (12) zur veränderlichen Beschleunigung von Erntegut (EG) und mit einer dem Nachbeschleunigungsorgan (12) nachgeordneten Überladeeinrichtung (13), an welcher am auswurfseitigen Ende eine bewegliche Auswurfklappe (26) angeordnet ist, zum Auswerfen des Ernteguts (EG) in einen Ladebehälter (47), wobei die Überladeeinrichtung (13) um eine vertikal verlaufende Achse (20) und eine horizontal verlaufene Achse (21) schwenkbar ist, wobei zur veränderlichen Beschleunigung des Erntegutes (EG) die Weite eines Erntegutdurchgangsspaltes (31) des Nachbeschleunigungsorgans (12) mittels einer Spaltänderungsvorrichtung (37) anpassbar ist, wobei der Spaltänderungsvorrichtung (37) eine Steuerungsvorrichtung (14) zugeordnet ist, die zur Ansteuerung der Spaltänderungsvorrichtung (37) durch von der Steuerungsvorrichtung (14) generierte Steuersignale eingerichtet ist, **dadurch gekennzeichnet, dass** die Steuerungsvorrichtung (14) dazu eingerichtet ist, von einer Detektionseinrichtung (45) generierte Daten zu empfangen und auszuwerten, welche zumindest die Position der Überladeeinrichtung (13) umfassen, und in Abhängigkeit von der Auswertung der Daten der Detektionseinrichtung (45) die Steuersignale zur Anpassung der Weite des Erntegutdurchgangsspaltes (31) zu generieren.

2. Selbstfahrende Erntemaschine (1) nach Anspruch 1, **dadurch gekennzeichnet, dass** die Überladevorrichtung (13) durch eine Aktorik (24) um die vertikal verlaufende Achse (20) und/oder mittels zumindest eines Linearaktors (22) um die horizontal verlaufende Achse (21) voneinander unabhängig schwenkbar ist, sowie dass die Auswurfklappe (26) durch einen Aktuator (27) um eine horizontal verlaufende Schwenkachse (28) verschwenkbar ist.

3. Selbstfahrende Erntemaschine (1) nach Anspruch 1 oder 2, **dadurch gekennzeichnet, dass** die Detektionseinrichtung (45) einen Drehwinkelsensor (23) zur Erfassung eines Drehwinkels sowie einen Höhensensor (25) zur Erfassung eines Höhenschwenkwinkels der Überladeeinrichtung (13) und einen Winkelsensor zur Erfassung eines Schwenkwinkels der Auswurfklappe (26) umfasst und dass die Steuerungsvorrichtung (14) zumindest einen dieser Parameter zur Bestimmung der Position der Überladeeinrichtung (13) auswertet.

4. Selbstfahrende Erntemaschine (1) nach einem der Ansprüche 1 bis 3, **dadurch gekennzeichnet, dass** an der Überladevorrichtung (13) eine optische Sensoranordnung (30) angeordnet ist, welche zur Bestimmung der Position und/oder der Art des Ladebehälters (47) und/oder zur Bestimmung eines Auftreffpunkts (AP) des Ernteguts (EG) in dem Ladebehälter (47) eingerichtet ist.

5. Selbstfahrende Erntemaschine (1) nach einem der vorangehenden Ansprüche, **dadurch gekennzeichnet, dass** an der Überladevorrichtung (13) zumindest ein Sensor (29) angeordnet ist, welcher Eigenschaften des Erntegutes (EG) detektiert und entsprechende Daten an die Steuerungsvorrichtung (14) überträgt.

6. Selbstfahrende Erntemaschine (1) nach einem der vorangehenden Ansprüche, **dadurch gekennzeichnet, dass** die Spaltänderungsvorrichtung (37) dazu eingerichtet ist, die Weite des Erntegutdurchgangsspaltes (31) auf einen Minimalwert von 2 mm bis zu einem Maximalwert von 80 mm einzustellen.

7. Selbstfahrende Erntemaschine (1) nach einem der vorangehenden Ansprüche, **dadurch gekennzeichnet, dass** die Spaltänderungsvorrichtung (37) eine Verstellcharakteristik mit einem im Wesentlichen progressiv ansteigenden Verlauf der Einstellung der Weite des Erntegutdurchgangsspaltes (31) aufweist.

8. Selbstfahrende Erntemaschine (1) nach einem der vorangehenden Ansprüche, **dadurch gekennzeichnet, dass** die Steuerungsvorrichtung (14) dazu eingerichtet ist, die Spaltänderungsvorrichtung (37) derart anzusteuern, um die Weite des Erntegutdurchgangsspaltes (31) mit zunehmender Trockenheit des Erntegutes (EG) und/oder abnehmendem Erntegutdurchsatz zu reduzieren.

9. Selbstfahrende Erntemaschine (1) nach einem der vorangehenden Ansprüche, **dadurch gekennzeichnet, dass** die Steuerungsvorrichtung (14) zur automatischen Ansteuerung der Spaltänderungsvorrichtung (37) eingerichtet ist.

10. Selbstfahrende Erntemaschine (1) nach einem der vorangehenden Ansprüche, **dadurch gekennzeichnet, dass** die Steuerungsvorrichtung (14) eine Speichereinheit (15) umfasst, in der zumindest eine Kennlinie (44) oder ein Kennlinienfeld für die einzustellende Weite des Erntegutdurchgangsspaltes (31) in Abhängigkeit von der Position der Überladeeinrichtung (13), der Position des Ladebehälters (47) und des Auftreffpunktes (AP) hinterlegt ist, und dass die Steuerungsvorrichtung (14) eine Recheneinheit (16) umfasst, welche die zumindest eine Kennlinie (44) oder das zumindest eine Kennlinienfeld zur Ansteuerung der Spaltänderungsvorrichtung (37) auswertet.

11. Selbstfahrende Erntemaschine (1) nach Anspruch 10, **dadurch gekennzeichnet, dass** in der Speichereinheit (15) zumindest ein relativer oder absoluter Schwellwert für eine Änderung der Position der Überladeeinrichtung (13) hinterlegt ist, dessen Überschreiten die Steuerungsvorrichtung (14) als Indikator zur Anpassung der Weite des Erntegutdurchgangsspaltes (31) interpretiert

12. Selbstfahrende Erntemaschine (1) nach einem der vorangehenden Ansprüche, **dadurch gekennzeichnet, dass** das Nachbeschleunigungsorgan (12) eine Drehachse (33) aufweist, die endseitig in Führungen (34) gelagert ist, die an Seitenwänden, die ein das Nachbeschleunigungsorgan (12) zumindest abschnittsweise ummantelndes Gehäuse (35) begrenzen, angeordnet sind, und dass die Spaltänderungsvorrichtung (37) zur, insbesondere translatorischen, Bewegung des Nachbeschleunigungsorgans (12) eine Aktorik (38, 39, 40) umfasst, mittels der die Weite des Erntegutdurchgangsspaltes (31) veränderbar ist.

13. Selbstfahrende Erntemaschine (1) nach einem der vorangehenden Ansprüche, **dadurch gekennzeichnet, dass** die Steuerungsvorrichtung (14) dazu eingerichtet ist, mittels eines Positionsortungssensors (46) das Erreichen eines Vorgewendes zu bestimmen und in Abhängigkeit von einem sensorisch bestimmten Erntegutdurchsatz die Weite des Erntegutdurchgangsspaltes (31) mit abnehmendem Erntegutdurchsatz zu reduzieren und zumindest für die Dauer des Durchfahrens des Vorgewendes die veränderte Weite des Erntegutdurchgangsspaltes (31) unabhängig von einer zwischenzeitlichen Änderung der Position der Überladevorrichtung (13) beizubehalten.

14. Selbstfahrende Erntemaschine (1) nach einem der vorangehenden Ansprüche, **dadurch gekennzeichnet, dass** die Steuerungsvorrichtung (14) dazu eingerichtet ist, für ein Anschneiden eines Feldbestands automatisch die Weite des Erntegutdurchgangsspaltes (31) auf eine für die zu erntende Erntegutart spezifische minimale Weite einzustellen.

15. Verfahren zum Betreiben einer selbstfahrenden landwirtschaftlichen Erntemaschine (1), insbesondere eines Feldhäckslers, mit zumindest einem Nachbeschleunigungsorgan (12) zur veränderlichen Beschleunigung von Erntegut (EG) und mit einer dem Nachbeschleunigungsorgan (12) nachgeordneten Überladeeinrichtung (13), an welcher am auswurfseitigen Ende eine bewegliche Auswurfklappe (26) angeordnet ist, zum Auswerfen des Ernteguts (EG) in einen Ladebehälter (47), wobei die Überladeeinrichtung (13) um eine vertikal verlaufende Achse (20) und eine horizontal verlaufene Achse (21) schwenkbar ist, wobei zur veränderlichen Beschleunigung des Erntegutes (22) die Weite eines Erntegutdurchgangsspaltes (31) des Nachbeschleunigungsorgans (12) mittels einer Spaltänderungsvorrichtung (37) angepasst wird, wobei die Spaltänderungsvorrichtung (37) durch von einer Steuerungsvorrichtung (14) generierten Steuersignale angesteuert wird, **dadurch gekennzeichnet, dass** die Steuerungsvorrichtung (14) von einer Detektionseinrichtung (45) generierte Daten empfängt und auswertet, welche zumindest die Position der Überladeeinrichtung (13) umfassen, und dass die Steuerungsvorrichtung (14) in Abhängigkeit von der Auswertung die Steuersignale zur Anpassung der Weite des Erntegutdurchgangsspaltes (31) generiert.
